# EUROPEAN PATENT APPLICATION

(11) **EP 1 933 583 A1**
(43) Date of publication of application: **18.06.2008**
(21) Application number: 07123187.2
(22) Date of filing: 13.12.2007
(51) Int. Cl.: H04Q 7/38

(54) **Radio network control method and device**

(30) Priority: 13.12.2006 JP 2006336105
(71) Applicant: FUJITSU LIMITED, Kawasaki-shi, Kanagawa 211-8588 (JP)
(72) Inventor: Shikama, T. c/o FUJITSU KYUSHU NETWORK TECHN. LTD., Fukuoka-shi Fukuoka 814-8588 (JP); Kikukawa, F. c/o FUJITSU KYUSHU NETWORK, Fukuoka-shi Fukuoka 814-8588 (JP); Nishimura, K. c/o FUJITSU KYUSHU NETWORK, Fukuoka-shi Fukuoka 814-8588 (JP); Satoh, H. c/o FUJITSU KYUSHU NETWORK TECHN. LTD., Fukuoka-shi Fukuoka 814-8588 (JP); Mori, Y. c/o FUJITSU KYUSHU NETWORK TECHN. LTD., Fukuoka-shi Fukuoka 814-8588 (JP)
(74) Representative: Wilding, Frances Ward

(57) **Abstract**

In a radio network control method and device which avoid a congestion state by controlling a handover request when a transportable base station is moving, when location information is received from the transportable base station, enable/disable of a handover between the transportable base station and another base station is determined based on the location information and preset handover information per area. When handover enable is determined, information of a peripheral cell which allows a handover to the other base station is notified to a user equipment using a cell of the transportable base station based on in-use cell information per user equipment. Alternatively, information of a peripheral cell which allows a handover to the transportable base station is notified to a user equipment using a cell of a base station to which the transportable base station has moved.

## Description

### Background of the Invention

### Field of the Invention

The present invention relates to a radio network control method and device, and in particular to a radio network control method and a device thereof controlling a handover of a user equipment within an area of a transportable base station in a mobile communication network.

### Description of the Related Art

(1) Regarding handover control
When a user equipment (mobile terminal) moves to a cell boundary or the like so that electric wave from a base station becomes weak, communication becomes unable to be performed as it is. This system is to perform simultaneous communication, when the electric wave has become weak or before it becomes weak, with a plurality of base stations emitting strong electric wave, in which a switchover to a base station with a good electric wave condition is performed every time the user equipment moves to the cell boundary.

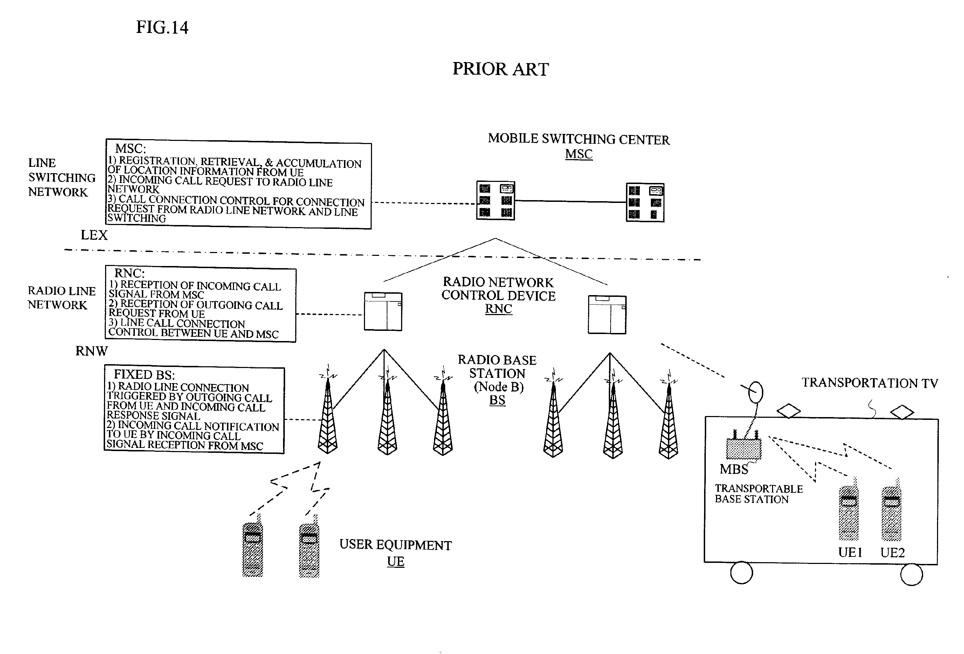

(2) Regarding functional share concerning network arrangement and call connection
A mobile radio network forms a hierarchy network, as shown in Fig. 14, by a user equipment UE, a radio base station (Node B) BS, a radio network control device RNC including a transportable (mobile) base station MBS, and a mobile switching center MSC. The functions of these elements are as follows:

· User equipment UE: A mobile terminal, which is a communication terminal connected to a radio network through the radio base station BS and used by a movable user even during communication;

· Radio base station BS: A base station controlling a plurality of small radio zones, enabling multiplex communication with a plurality of user equipments UEs through a plurality of areas, and having abilities of relaying a call control signal from the user equipment UE to the radio network control device RNC and of relaying a radio line control signal from the radio network control device RNC to the user equipment UE;

· Transportable base station MBS: A kind of radio base station, having an area within moving transportation TV such as a bullet train as a service area by being connected to the radio network control device RNC with a radio line;

· Radio network control device RNC: A device performing a radio line control, a call connection control, and a moving (handover) control for another radio network control device RNC and the base station BS, a communication rate control of the user equipment UE, and the like. Performing the radio line control for the concerned base station BS after a signal through the base station BS is notified to the mobile switching center MSC upon sending an outgoing call, broadcasting a signal from the mobile switching center MSC to a plurality of base stations BSs existing in the neighborhood of the user equipment UE upon receiving an incoming call, and performing a connection control similar to that upon sending an outgoing call when a response is received through the base station BS where the user equipment UE exist;

· Mobile switching center MSC: A connection node between a radio line network RNW and a general line switching network LFX, which performs the connection control for the mobile switching center MSC when a call connection request from the radio line network RNW is not the one from the concerned mobile switching center MSC, and broadcasts a receiving call signal to the radio network control device RNC of the concerned area when a receiving destination user equipment UE is within the concerned mobile switching center MSC, upon incoming call request from the outside of the concerned mobile switching center MSC. While the connection node performing the exchange of the packet communication is also called GSN, the switching network thereof will be hereinafter described as the same meaning.

(3) Regarding handover control method using a prior art transportable base station
Conventionally in the transportable base station MBS placed within a public transportation TV such as a bus or a train, mobile terminal user equipments UE1 and UE2 existing in the area of the transportable base station MBS move together with the station MBS as the transportation TV moves. In this case, a handover to a cell except a cell managed by the transportable base station MBS can be performed even during the movement of the mobile terminal user equipments UE1 and UE2, so that the mobile terminal user equipments UE1 and UE2 in the public transportation TV respectively perform the handover. For example, the mobile terminal user equipments UE1 and UE2 receive cell information of both of the transportable base station MBS and a fixed base station BS, performs an additional handover of the cell of the fixed base station BS, performs deletion of handover when the mobile terminal user equipments UE1 and UE2 move away from the cell, and repeats the addition and deletion of the handover, thereby enabling communications during the movement.

Therefore, when the transportable base station MBS is placed within a bullet train or the like whose moving speed is fast, and when numerous moving mobile terminals exist, handover requests frequently occur and a congestion of the network occurs.

(4) Regarding prior art moderating network congestion
There has been proposed prior art in which a relay device is provided in a moving medium, the relay device collects information of a plurality of mobile terminals within the moving medium, performs a location notification to the fixed base station as a representative, and relays the connection control and communication, thereby reducing the traffic (see e.g. patent document 1).

Also, there has been proposed prior art in which an existence of a mobile terminal in a moving space is confirmed, a location registration of the mobile terminal is executed together with updating a location registration of the moving space, thereby reducing the traffic of the location registration (see e.g. patent document 2).
[ Patent document 1 ] Japanese patent application laid-open No.06-244780
[ Patent document 2 ] Japanese patent application laid-open No.11-355835

When the transportable base station is placed in the public transportation such as a bullet train, more handover requests have conventionally occurred each time as the electric wave from the fixed base station becomes weak, at which control signals have been concentrated on the network side. Therefore, as mentioned above, when there are numerous mobile terminals moving along with the public transportation, the network becomes congested. In this state, problems such as a failure of incoming/outgoing call, a failure of the handover, and occurrence of a call disconnection arise.

In the prior art according to the above-mentioned patent documents 1 and 2 for solving such a network congestion, the traffic is reduced by collecting the information of the mobile terminal in the moving space to be notified. Even if the prior art is applied, a handover to a cell except the cell managed by the transportable base station is enabled, so that the handover request during the movement can not be controlled.

### Summary of the Invention

It is accordingly desirable for an embodiment of the present invention to provide a radio network control method and device which avoid a congestion state by controlling a handover request when a transportable base station is moving.

In order to achieve the above-mentioned desirable outcome, a radio network control method (or device) according to an embodiment of the present invention comprises: a first step of (first portion) receiving location information from a transportable base station; and a second step of (second portion) determining, based on the location information and preset handover information per area, enable/disable of a handover between the transportable base station and another base station.

Namely, while embodiments of the present invention enable a mutual handover with a transportable base station to be performed only to a base station cell corresponding to an area (e.g. railway station) preliminarily stored in handover information per area (associated with or corresponding to area), a handover with another base station is inhibited in another area.

Accordingly, by flexibly restricting a handover enable cell depending on a state such as moving or stopping, a user equipment (including a user equipment having arrived by transportation provided with the transportable base station) existing in the cell of the transportable base station is inhibited from performing a useless handover with the other base station together with the movement of the transportable base station.

Also, the radio network control method (or device) may further comprise a step of (portion) notifying to a user equipment using a cell of the transportable base station, when handover enable is determined at the second step (second portion), information of a peripheral cell which allows a handover to the other base station based on in-use cell information per user equipment.

Thus, the user equipment using the cell of the transportable base station and having received the peripheral cell information sends up a handover request corresponding to the peripheral cell, thereby enabling the user equipment to perform the handover to the other base station.

Also, the radio network control method (or device) may further comprise a step of (portion) notifying to a user equipment using a cell of a base station to which the transportable base station has moved, when handover enable is determined at the second step (second portion), information of a peripheral cell which allows a handover to the transportable base station based on in-use cell information per user equipment.

Thus, the user equipment having received the peripheral cell information and using a cell of a base station to which the transportable base station has moved (e.g. user equipment having arrived by transportation provided with the transportable base station) sends up a handover request corresponding to the peripheral cell, thereby enabling the user equipment to perform the handover to the other base station. Namely, in the case of stopping at a station or the like, a cell under a fixed base station is also notified to the user equipment as a handover object cell.

Also, the radio network control method (or device) may further comprise a step of (portion) controlling, when handover enable/disable control information with the other base station is received from the transportable base station in addition to the location information, the enable/disable of the handover between the transportable base station and the other base station based on the handover enable/disable control information.

Thus, when the transportable base station is mounted on e.g. rapid transportation, a handover between the transportable base station and the other base station is "enable" or "disable" depending on the handover enable/disable information.

Also, the radio network control method (or device) may further comprise a step of (portion) executing, when an addition request or a deletion request of the handover is received from a user equipment having received the peripheral cell information, an addition or deletion of the handover, and of adding the peripheral cell information to the in-use cell information corresponding to the user equipment or deleting the peripheral cell information.

Thus, it is desirable for the in-use cell information per user equipment to always be updated to the latest state, so that a user equipment to which the peripheral cell information is notified can be determined.

Also, the handover information per area may comprise present location information, and the method (or device) may further comprise a step of (portion) updating the present location information to information of a present location in case of a handover enable, at which time no notification of the peripheral cell information and no update of information are executed even when the handover enable is determined, thereby controlling a handover request.

Thus, the case of only moving within the handover enable area is detected, thereby enabling unnecessary updates of the above-mentioned location information, handover information (including present place information) per area, and in-use cell information per user equipment, and an unnecessary notification of the peripheral cell information may be avoided.

In embodiments of the present invention, the transportable base station is placed in transportation and an automobile, and the peripheral cell information is changed, thereby enabling a useless handover during the move to be avoided.

Also, by using the handover enable/disable control information, the user equipment during telephone conversation in the cell under the fixed base station can be inhibited from temporarily performing the handover to the cell under the transportable base station which is moving (even if the cell is added due to accession, it moves far away soon so that the added cell is deleted).

### Brief Description of the Drawings

The above and other desirable outcomes and advantages of the invention will be apparent upon consideration of the following detailed description, taken in conjunction with the accompanying drawings, in which the reference numerals refer to like parts throughout and in which:
Fig.1 is a block diagram showing a system arrangement to which a radio network control method and device according to an embodiment of the present invention are applied;
Figs.2A-2D are diagrams showing a database used in a radio network control device RNC of an embodiment of the present invention;
Figs.3A-3C are diagrams illustrating an overall operation of an embodiment of the present invention;
Fig.4 is a sequence diagram showing an operation example (1) (ordinary movement: No.1) of a radio network control method and device according to the present invention;
Fig.5 is a sequence diagram showing an operation example (1) (ordinary movement: No.2) of a radio network control method and device according to the present invention;
Fig.6 is a sequence diagram showing an operation example (1) (ordinary movement: No.3) of a radio network control method and device according to the present invention;
Fig.7 is a sequence diagram showing an operation example (1) (ordinary movement: No.4) of a radio network control method and device according to the present invention;
Fig.8 is a sequence diagram showing an operation example (1) (ordinary movement: No.5) of a radio network control method and device according to the present invention;
Fig.9 is a sequence diagram showing an operation example (2) (riding and stopover on the way: No.1) of a radio network control method and device according to the present invention;
Fig.10 is a sequence diagram showing an operation example (2) (riding and stopover on the way: No.2) of a radio network control method and device according to the present invention;
Fig.11 is a sequence diagram showing an operation example (2) (riding and stopover on the way: No.3) of a radio network control method and device according to the present invention;
Fig. 12 is a sequence diagram showing an operation example (3) (rapid movement: No.1) of a radio network control method and device according to the present invention;
Fig.13 is a sequence diagram showing an operation example (3) (rapid movement: No.2) of a radio network control method and device according to the present invention; and
Fig. 14 is a block diagram showing a general network arrangement including a transportable base station.

### Description of the Embodiments

Hereinafter, an embodiment of the present invention will be described referring to attached figures.

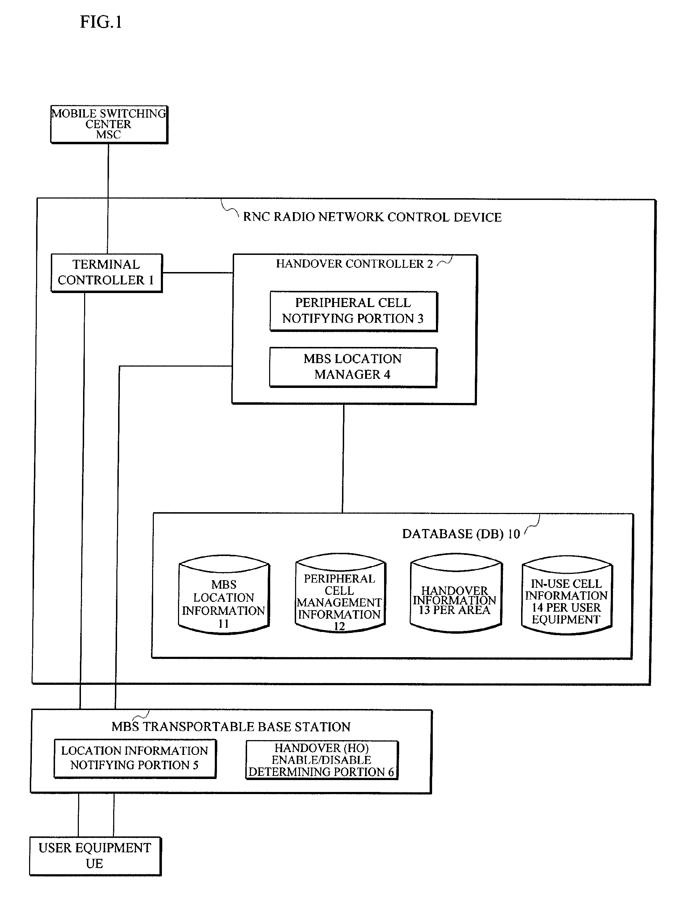

### [1] Arrangement: Fig.1

The radio network control device RNC according to the present invention has an arrangement shown in Fig.1. The functions of the portions are as follows:

. Terminal controller 1: Receiving a connection request and a handover request from a user equipment UE, and controlling the connection from the user equipment UE to a mobile switching center MSC.

· Handover controller 2: Having the following peripheral cell notifying portion 3 and MBS location manager 4:

1) Peripheral cell notifying portion 3: Selecting peripheral cell information of an area where the user equipment UE under the transportable base station MBS exists, and notifying the information to the concerned user equipment UE;

2) MBS location manager 4: Receiving location information notified by the transportable base station MBS, and managing the location information as MBS location management information;

· Database (DB) 10: Having the following MBS location information 11, peripheral cell management information 12, handover information 13 per area, and in-use cell information 14 per user equipment:

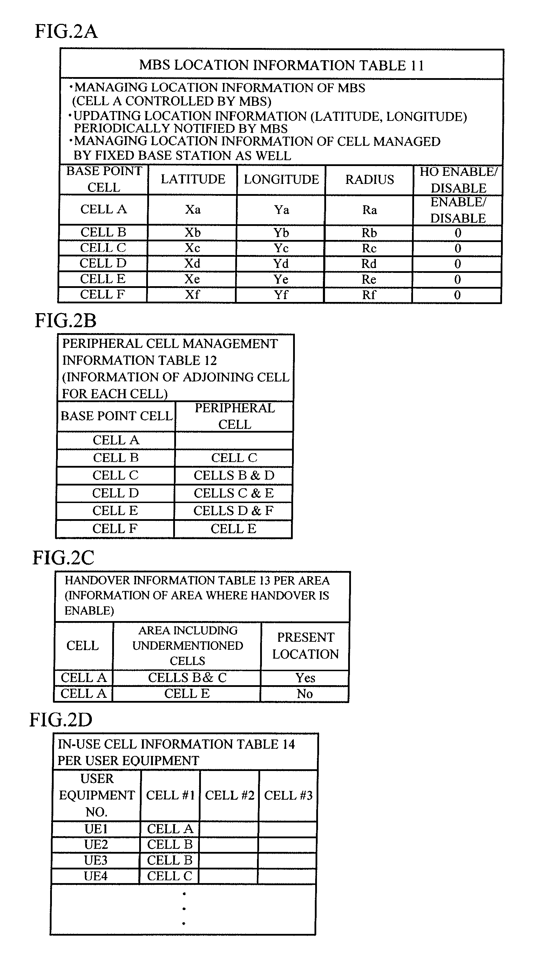

1) MBS location information 11: Fig.2A
A table managing the location information of the transportable base station MBS (or a cell A controlled by the transportable base station MBS) and the location information of the cell managed by the fixed base station BS. The transportable base station MBS updates the location information (latitude, longitude) to be periodically notified;

2) Peripheral cell management information 12: Fig.2B
Information of an adjoining cell for each cell;

3) Handover information 13 per area: Fig.2C
A table managing information of an area where handover is "enable";
4) In-use cell information 14 per user equipment: Fig.2D
Managing cell information during conversation per user equipment (call) (retrieving object user equipment to which the peripheral cell information is notified);

Also, the transportable base station MBS has the following location information notifying portion 5 and handover (HO) enable/disable determining portion 6:

1) Location information notifying portion 5: Notifying the location information (latitude, longitude) and handover enable/disable control information indicating whether or not a handover is "enable" in the area determined by the handover enable/disable determining portion 6 to the MBS location manager 4 of the radio network control device RNC every time the transportable base station MBS moves to another area;

2) Handover enable/disable determining portion 6: Determining whether or not a handover is "enable" depending on a determination condition of handover enable/disable preset therein.

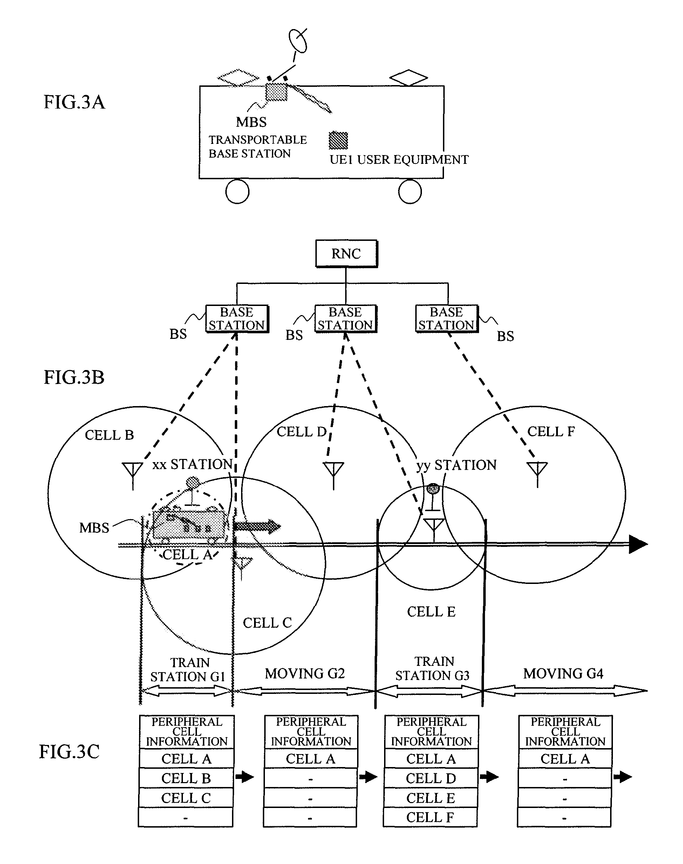

### [2] Operation example: Figs.3A-3C and 4-13 Schematic operation: Figs.3A-3C

The transportable base station MBS shown in Fig.3A performs communication with the radio network control device RNC through a radio line such as microwave and WiMax. The user equipment UE1 is in the area of the transportable base station MBS even during the movement. When the user equipment UE1 moving with the train sends an outgoing call, the communication is enabled through the transportable base station MBS. Also, upon receiving an incoming call, the communication through the transportable base station MBS is similarly performed. This transportable base station MBS is placed in a transportation TV such as a train or a bus, an automobile, or the like.

The network side identifies the location information of the transportable base station MBS. When the transportable base station MBS moves, peripheral cell information to be notified to the user equipment UE is changed at a boarding and alighting place (xx station; yy station in the example of Fig.3B) so that a mutual handover may be made between both of the peripheral cells of the fixed base station BS and the transportable base station MBS (see Fig.3C).

Namely, in the vicinity of the xx station and the yy station, the cells under the fixed base station (cells B and C; cell E) are incorporated into the peripheral cell so that the mutual handover may be made between the cells under the fixed base station (cells B and C; cell E). Between the stations, i.e., when the transportable base station MBS is moving, a cell except the cell of the transportable base station MBS is prevented from being incorporated into the peripheral cell, thereby preventing the user equipment existing in the area of the transportable base station MBS from performing a useless handover.

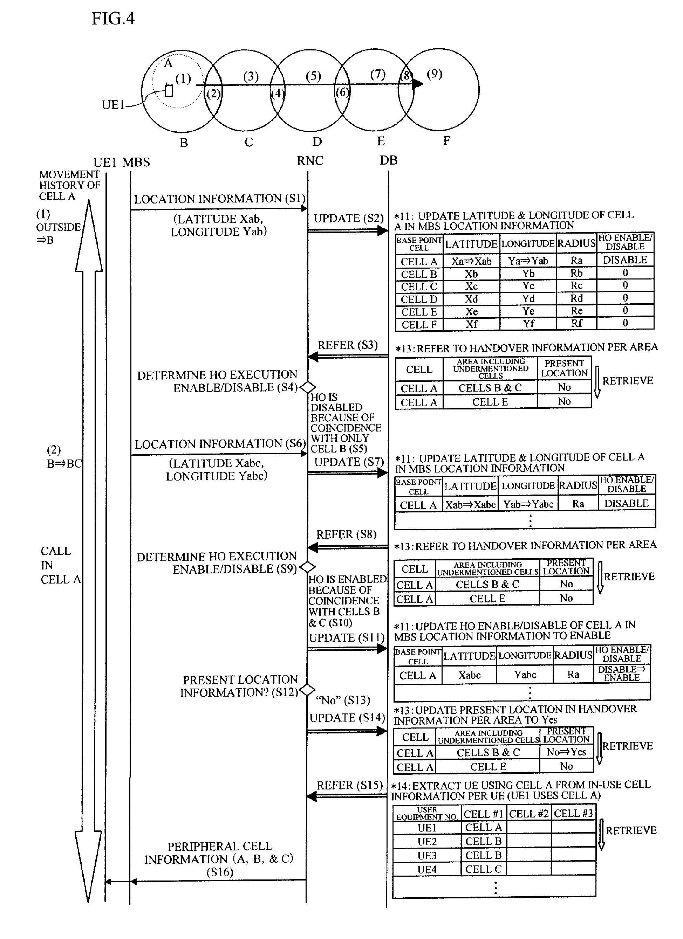

### Operation example (1) (ordinary movement): Figs.4-8

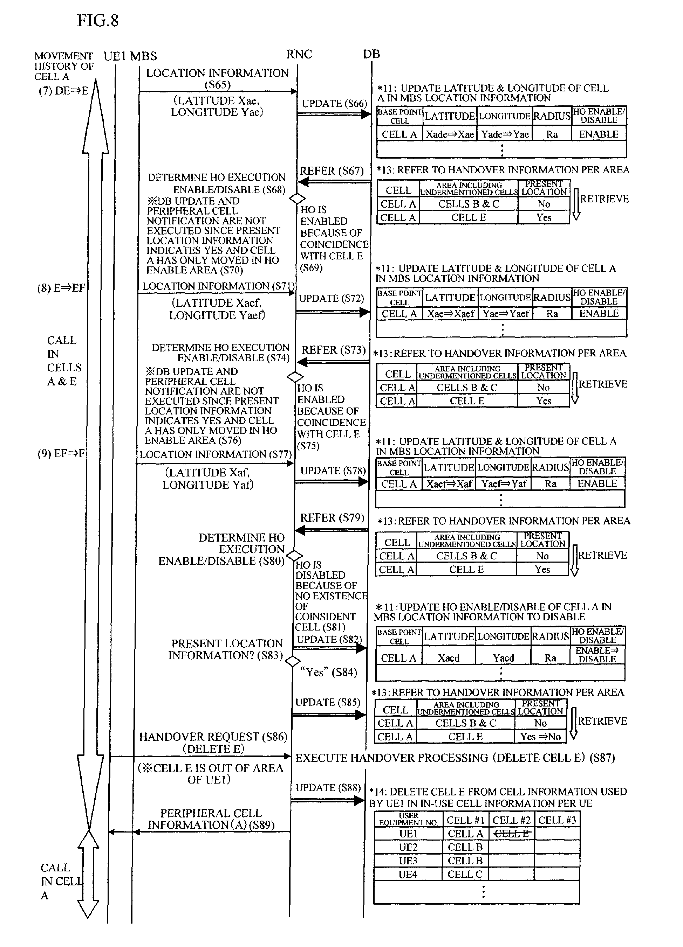

This operation example (1) indicates an operation in the case where the user equipment UE1 existing in the cell A of the transportable base station MBS placed in the transportation TV which stops in the areas shown in Figs.4(2) and 8(7) moves within the cells B-F (see Figs.3A-3C and 4) of the fixed base station BS. It is supposed that initial values of the latitude and the longitude of the cell A are (Xa, Ya) and the user equipment UE1 is in conversation only in the cell A.

Firstly, when the transportable base station MBS moves to the cell B of the fixed base station from the outside as shown in Fig.4(1) (hereinafter, occasionally referred to as an area (1) or a movement history (1)), the location information notifying portion 5 of the transportable base station MBS managing the cell A notifies its own location (latitude, longitude) to the radio network control device RNC (at step S1 of Fig.4).

The MBS location manager 4 having received the location updates the information (latitude, longitude) of the cell A which is the concerned cell in the MBS location information 11 to (Xab, Yab) (at step S2).

The MBS location manager 4 refers to the handover information 13 per area (at step S3), and determines whether or not there is an area coincident with the area of the cell A from the latitude and the longitude of the cell A and a cell radius preset (at step S4). As a result, only the cell B is coincident with the cell A in the example set in the handover information 13 per area, so that it is determined that the handover is "disable" (at step S5).

Also when the cell A of the transportable base station MBS moves to the area where the cells B and C are overlapped as shown in Fig.4(2), the location information notifying portion 5 notifies its own location (latitude Xabc, longitude Yabc) (at step S6). Also in this case, the information (latitude Xab, longitude Yab) of the cell A of the MBS location information is similarly updated to (Xabc, Yabc) (at step S7).

Then, the MBS location manager 4 refers to the handover information 13 per area to determine whether or not the cell A has moved to the area preset, namely, whether or not the base station cell to which the cell A has moved is coincident with the cell of the area preset (at steps S8 and S9). As a result, the cell A of the transportable base station MBS is now located in the area where the cells B and C are overlapped, which is coincident with the example set in the handover information 13 per area of the cells B & C. The coincidence of the information indicates that the handover to the concerned cells B and C is allowable (at step S10). Therefore, an HO enable/disable of the cell A in the MBS location information 11 is updated to "enable" (at step S11). It is to be noted that "coincidence" in this case does not need to be "complete coincidence", but may include a preset cell.

Thus, since the cell A of the transportable base station MBS is located in the area of the cells B and C in the handover information 13 per area, information of "present location" in the handover information 13 per area is checked (at step S12). Since it results in "No", the information is updated to "Yes" (at steps S13 and S14). It is supposed that since the cell A is firstly located in the area of the cells B and C, the former information is marked with "No". The case where the information has changed from "No" to "Yes" means that the cell is newly located in the area, so that the handover controller 2 performs a peripheral cell notification request for the cells A, B, and C to the peripheral cell notifying portion 3. The peripheral cells in this case indicate a cell during conversation and a cell of an area where the cell is presently located.

The peripheral cell notifying portion 3 refers to the in-use cell information 14 per mobile equipment concerning the cell A (at step S15). At this step, a user equipment using the cell A is firstly searched. When the user equipment UE1 using the cell A is found, the cells A, B, and C are notified in the form of the peripheral cell information to the user equipment UE1 as a destination through the terminal controller 1 (at step S16).

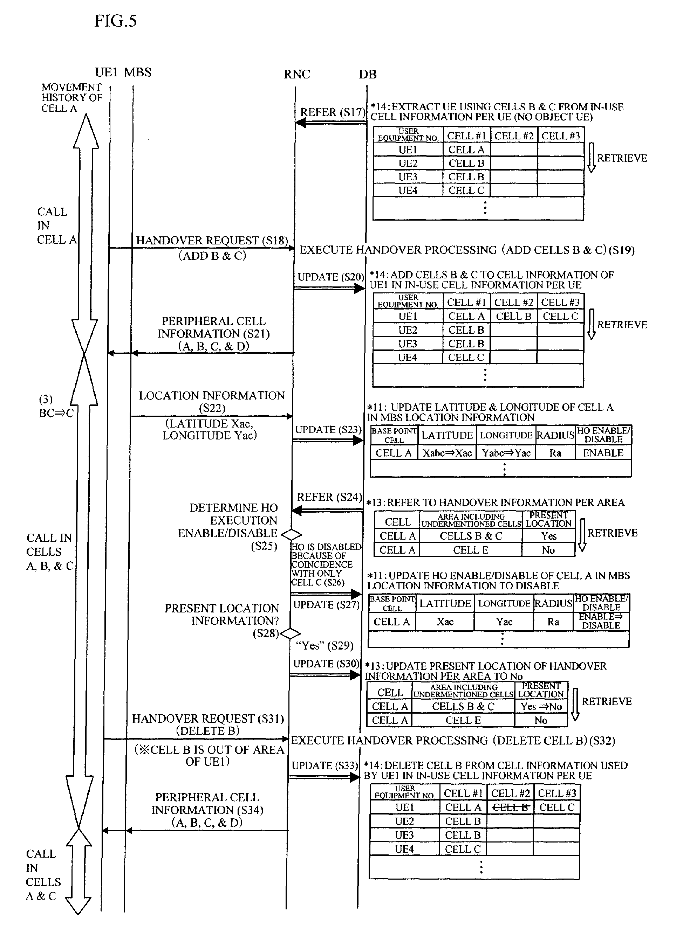

Also, a user equipment using both of the cells B and C in the area where the transportable base station MBS is located (e.g. a user equipment which is going to get on transportation TV in this area) is retrieved from the in-use cell information 14, so that "there is no object user equipment" is determined in this example (at step S17 in Fig.5).

The user equipment UE1 has been using only the cell A up to this time. Therefore, when the notification of the cells A, B, and C is received as the peripheral cell information, it is determined that the handover to the cells B and C is "enable" since the user equipment UE1 is in the location where the electric wave of the cells B and C can be received. An additional request of the cells B and C is notified to the radio network control device RNC as the handover request (at step S18).

The terminal controller 1 of the radio network control device RNC having received the additional request executes the handover to the cells B and C (addition of cells B and C) by the handover controller 2 (at step S19). By this handover, the cells B and C are added to the cell information of the user equipment UE1 in the in-use cell information 14 (at step S20).

Thereafter, in addition to the cells A, B, and C, a cell D which is the peripheral cell of the cell C is also added to the peripheral cell information notified to the user equipment UE1 by referring to the peripheral cell management information 12 (at step S21). The case where the peripheral cell information is thus determined by referring to the peripheral cell management information 12 is caused by the handover request, which is different from the peripheral cell information notified at step S16. Accordingly, the user equipment having received the notification of the then peripheral cell information only stores the peripheral cell information.

The transportable base station MBS continues to move, and when it moves to the area of the cell C shown in Fig.5(3), the location information (latitude Xac, longitude Yac) of the transportable base station MBS is notified to the MBS location manager 4 (at step S22), so that the MBS location manager 4 updates the information of the cell A in the MBS location information 11 (at step S23). Also, the MBS location manager 4 determines whether or not there is a cell whose area is coincident with the area of the cell A in the handover information 13 per area (at steps S24 and S25).

However, since the transportable base station MBS has already moved to the outside of the area of the cell B, there is no coincident area in the handover information 13 per area. Therefore, it is determined that the handover is "disable" (at step S26), the handover enable/disable of the cell A in the MBS location information 11 is updated to "disable" (at step S27), and the information in the handover information 13 per area in which the present location marked with "Yes" is changed to "No" (at steps S28-S30). Changing the present location information to "No" means that the cell A passes through the area to which the handover is "enable".

Since the user equipment UE1 passes through the area of the cell B at this time, the handover request of deleting the cell B is performed (at step S31). After the handover processing (at step S32), the user equipment UE1 assumes a state where only the cells A and C are in use. The cell B is deleted from the cell information used by the user equipment UE1 in the in-use cell information 14 (at step S33), so that the peripheral cell information notified from the peripheral cell information notifying portion 3 is about the cells A, B, C, and D (at step S34). The cell B in this case is notified as the peripheral cell of the cell C based on the peripheral cell management information 12.

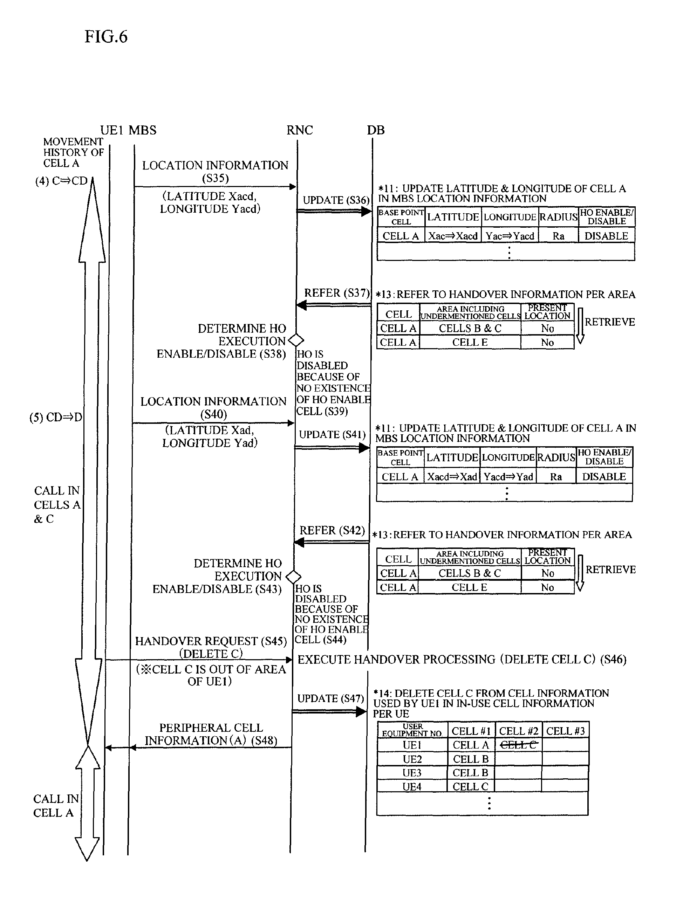

Furthermore, the transportable base station MBS continues to move to the area where the cells C and D are overlapped as shown in Fig.6(4), the location information is notified to the MBS location manager 4 (at step S35), where the MBS location manager 4 updates the MBS location information 11 (at step S36). Also, the MBS location manager 4 refers to the handover information 13 per area to determine whether or not there is an area coincident with the area of the cell A (at steps S37 and S38).

However, since the cell A has already been out of the area of the cell B, there is found no coincident area in the handover information 13 per area, so that the handover is "disable" (at step S39). While data in which the present location information is marked with "Yes" is tried to be changed to "No", the mark has already been No", so that it is recognized that the cell has only moved to the area where the handover is "disable".

Also, the operation when the cell A moves to the area of cell D as shown in Fig.6(5) is the same as that upon moving to the area of Fig.6(4) (at steps S40-S44). However, since the user equipment UE1 has already been out of the area of the cell C at this time, the handover request of deleting the cell C is performed (at step S45), so that by performing the handover processing (at step S46), the user equipment UE1 assumes a state where only the cell A is in use. At this time, the cell C is deleted from the cell information used by the user equipment UE1 in the in-use cell information 14 (at step S47), and the peripheral cell information notified from the peripheral cell notifying portion 3 is only cell A (at step S48), so that the execution of the handover to the other cell is "disable".

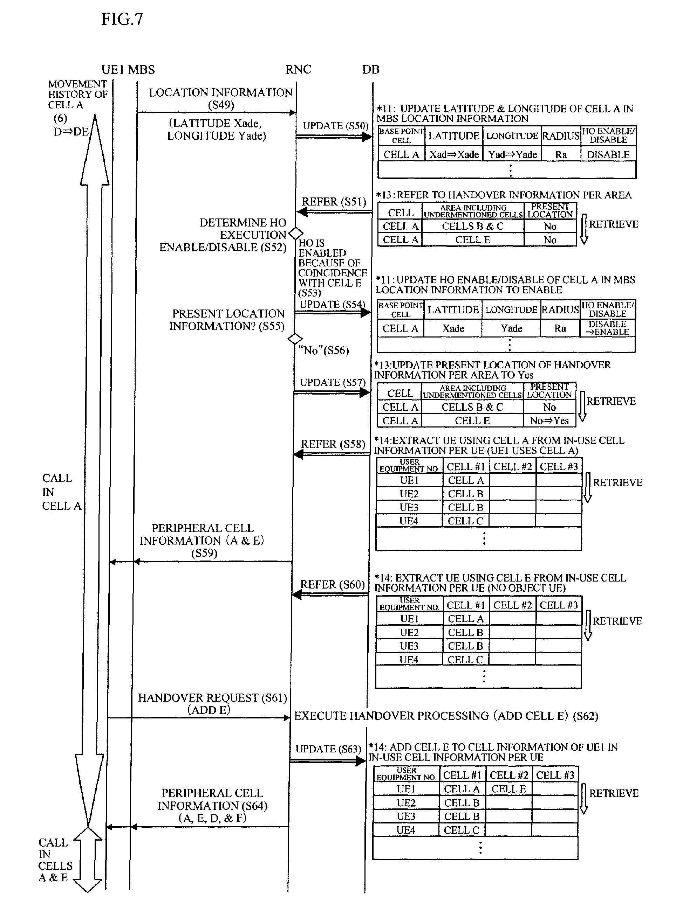

Thereafter, when the transportable base station MBS moves to the area where the cells D and E are overlapped as shown in Fig.7(6) in the same procedure, the handover to the cell E is allowable in the same way as the case of moving to the area of Fig.4(2) (at steps S50-S61), and the handover request of adding the cell E is performed (at step S62), so that conversation is performed in the cells A and E (at step S64).

When the cell A moves to the area of the cell E as shown in Fig.8(7) and the area ,of the cell F as shown in Fig.8(8), the handover to the cell E is allowable (at steps S69 and S75). It is to be noted that since the present location information at this time is "Yes" and the cell has only moved to the handover enable area, the data update and the notification of the peripheral cell are not executed (at steps S70 and S76).

When the cell A moves to the area of cell F as shown in Fig.8(9), the user equipment UE1 is out of the area of the cell E. Therefore, the handover request of deleting the cell E is performed, so that the user equipment UE1 assumes a state where only the cell A is in use (at steps S77-S89).

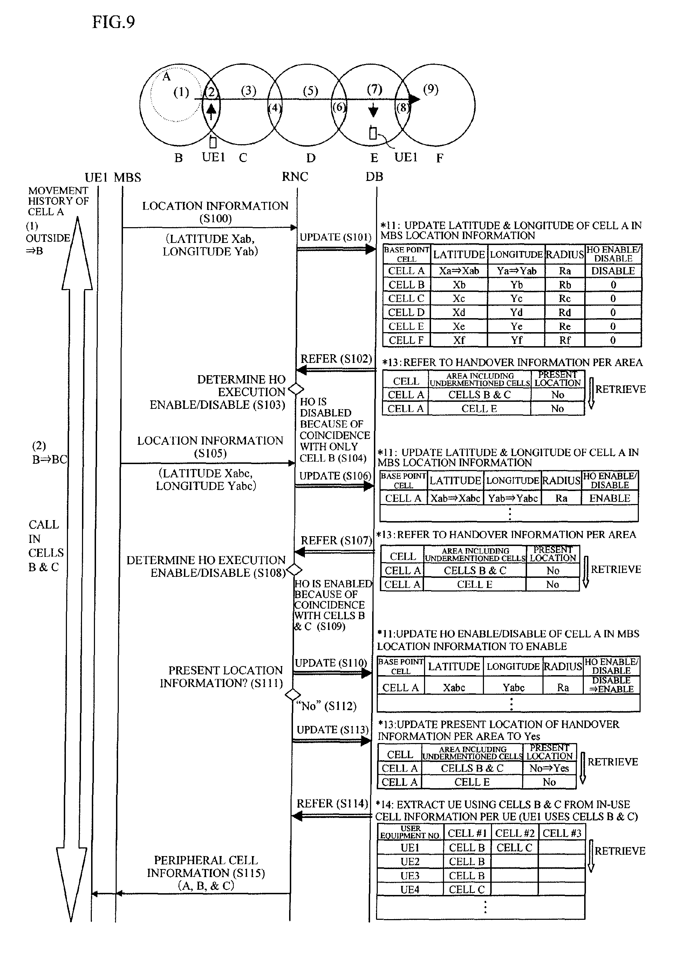

### Operation example (2) (boarding and alighting on the way): Figs.9-11

This operation example (2) indicates cases where the user equipment UE1 which is in conversation under the fixed base station BS boards and alights from the transportation TV which stops in the areas (2) and (7) respectively shown in Fig.4(2) and Fig.8(7) and which has the transportable base station MBS placed.

When the transportable base station MBS managing the cell A moves from Fig.9(1) to Fig.9(2), its own location (latitude Xab, longitude Yab) is notified through steps S100-S104 which are the same as steps S1-S5 shown in Fig.4(1) (at step S105 in Fig.9(2)). In this case, the information (latitude, longitude) of the cell A in the MBS location information 11 is updated (at step S106). Also, the MBS location manager 4 determines whether or not there is an area coincident with the area of the cell A by referring to the handover information 13 per area (at steps S107 and S108).

Since the cell A is found to exist in the overlapped area of the cells B and C from the example described in the handover information 13 per area in Fig.9, the area is coincident with the area of the cells B and C. The coincidence of the area means that the handover to the cell A is allowable (at step S109), so that the handover enable/disable in the MBS location information 11 is updated to "enable" (at step S110).

In view of the fact that the concerned area exists in the handover information 13 per area, the former data of the present location of the area is confirmed (at step S111). Since the former data is "No" (at step S112), the information is marked with "Yes" (at step S113). Changing from "No" to "Yes" means that the cell is newly located in the area, so that the peripheral cell notifying portion 3 retrieves the in-use cell information 14 per user equipment concerning the cells B and C, and extracts the user equipment UE1 using both of the cells B and C (at step S114).

The user equipment UE1 uses the cells B and C and is located in the overlapped area of the cells B and C, so that the notification for the cells A, B, and C is received as the peripheral cell information (at step S115).

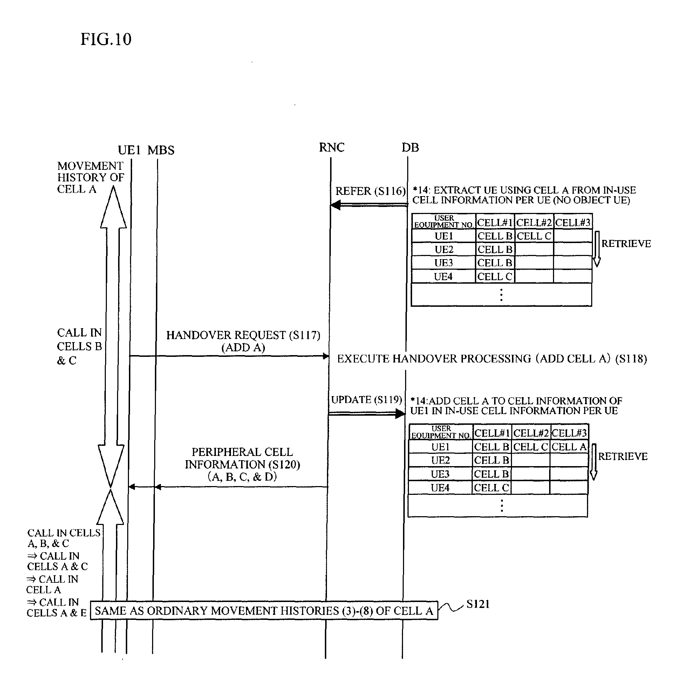

Also, the user equipment using the cell A is retrieved within the in-use cell information 14, resulting in "no object user equipment" in this case (at step S116 in Fig. 10).

Since the user equipment UE1 is located in the area where the electric wave of the cell A can be received, it is determined that the handover to the cell A is "enable", so that the additional request of the cell A is notified as the handover request to the radio network control device RNC (at step S117). The terminal controller 1 of the radio network control device RNC having received the additional request executes the handover to the cell A by the handover controller 2 (at step S118), and adds the cell A to the cell information of the user equipment UE1 in the in-use cell information 14 (at step S119). In addition to the cells A, B, and C, the cell D which is the peripheral cell of the cell C is also added to the peripheral cell information notified to the user equipment UE1, by referring to the peripheral cell management information 12 (at step S120).

Thereafter, the operation of movement histories (3)-(8) shown in Fig.10 is the same as that of Fig.5(3), Fig.6(4), (5), Fig.7(6), Fig.8(7) and (8), so that the description thereof is omitted (at step S121).

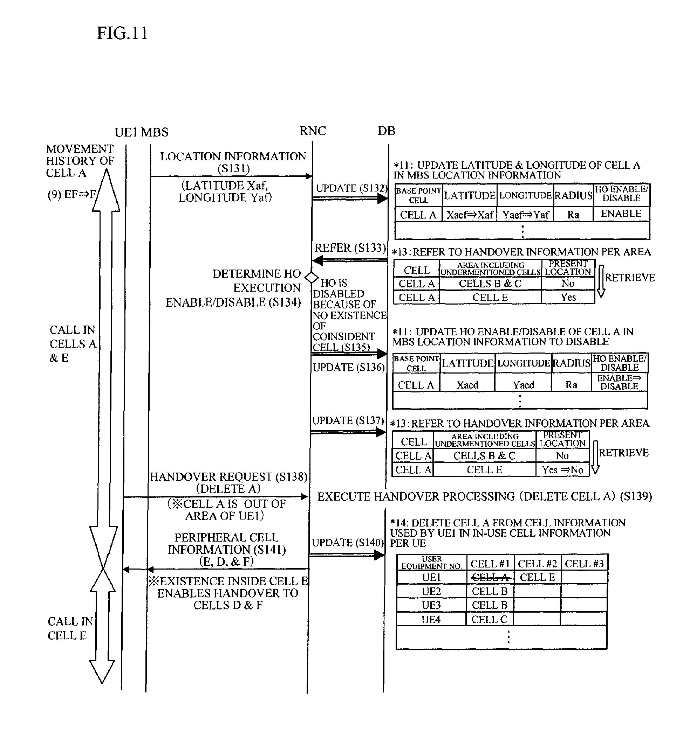

When the transportable base station MBS moves to the area of the cell F as shown in Fig.11(9), and when the cell A goes far away from the cell where the user equipment UE1 exists, the handover of deleting the cell A is executed (at steps S131-S139), so that the cell A is deleted from the in-use cell information 14 per user equipment corresponding to the user equipment UE1 (at step S140).

By deleting the cell A from the in-use cell information 14 per user equipment, the peripheral cell information from the transportable base station MBS is not notified to the user equipment UE1, so that the user equipment UE1 assumes a state of conversation only in the cell E. However, since the user equipment UE1 is located in the area of the cell E managed by the fixed base station, the peripheral cell information of the cells E, D, and F is notified (at step S141), so that the handover to the peripheral cells D and F is "enable".

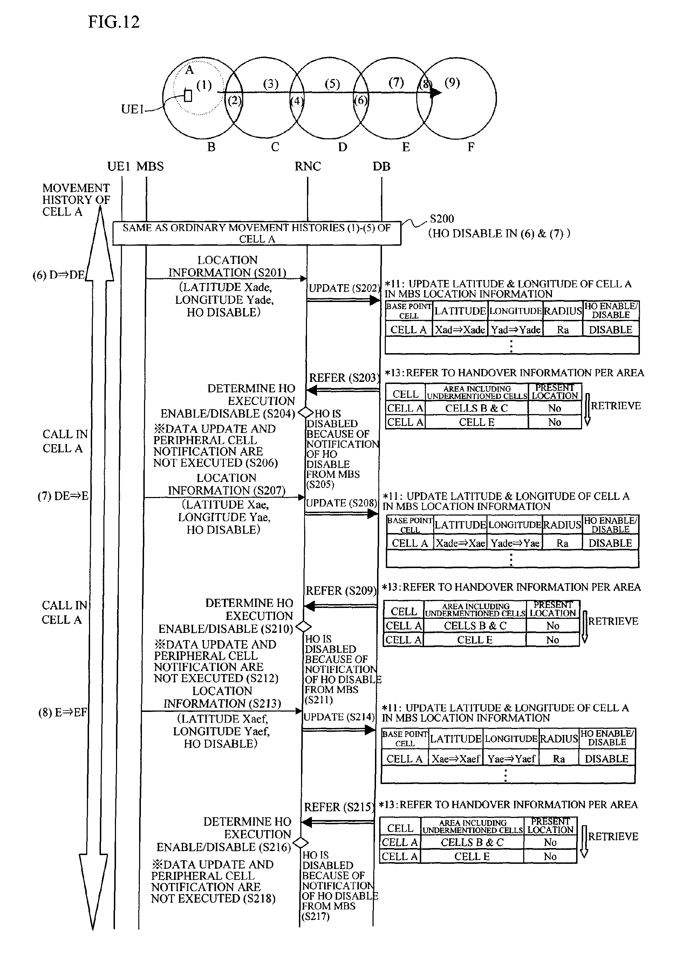

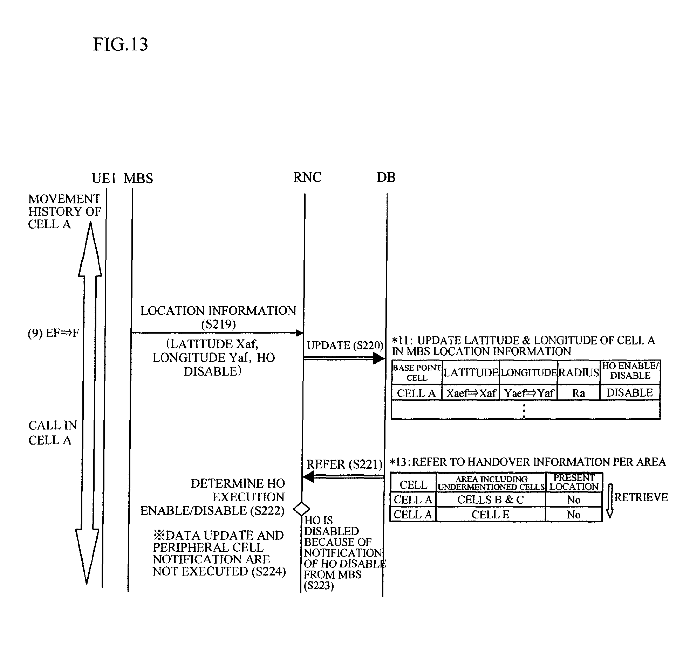

### Operation example (3) (rapid movement): Figs.12 and 13

This operation example (3) indicates cases where the user equipment UE1 located in the area of the transportable base station MBS placed in a rapid train or the like only stopping in the overlapped area of the cells B and C shown in Fig.12(2) and passing through the areas Fig. 12(6) and (7) moves in cells B-F of the fixed base station.

Firstly, this operation differs from the operation example (2) in the information notified from the location information notifying portion 5 of the transportable base station MBS. While in the operation example (2), the information of latitude and longitude is notified as the location information, in this operation example the information of the handover enable/disable is also notified from the transportable base station MBS.

Namely, according to the handover enable/disable determination condition preset by the handover enable/disable determining portion 6 of the transportable base station MBS, the handover enable/disable is determined, so that the handover enable/disable is notified to the location information notifying portion 5. For example, if the handover enable/disable determining condition is that while the transportable base station MBS is moving, the handover is "disable", the handover is "disable" while it is moving; while the transportable base station is stopped, the handover enable is notified to the location information notifying portion 5. In this example, a condition that the transportable base station MBS is stopped only in the area (2) to enable the handover is set.

In the operation example (3), the operation of movement histories (1)-(5) of the transportable base station MBS is the same as the contents described in the operation example (1) (at step S200).

When the transportable base station MBS moves to the overlapped area of the cells D and E as shown in Fig. 12(6), the location information (latitude, longitude, HO enable/disable) is notified to the MBS location manager 4 (HO enable/disable = "disable" is notified) (at step S201), so that the MBS location manager 4 updates the MBS location information 11 (at step S202). It is to be noted that the information of the handover enable/disable is included in the location information as the handover enable/disable control information.

Since the HO enable/disable notified from the transportable base station MBS is "disable", the notification of the peripheral cell information is not performed to the user equipment UE1 (at steps S203-S206). Thus, a cell except the cell A presently communicating is not notified, so that the handover to the cell except the cell A is not executed, and the communication in only the cell A is continued.

Also when the cell A moves to the area under the cell in Fig.13(9) through Figs.12(7) and 12(8), the MBS location information 11 is updated (at steps S207, S208, S213, S214, S219, and S220). However, HO enable/disable = "disable" is notified from the transportable base station MBS, so that the notification of the peripheral cell information is not performed to the user equipment UE1 (at steps S211, S212, S217, S218, S223, and S224). Thus, in the same way as Fig.12(6), the handover is not executed, so that the conversation in the cell A is continued.

It is to be noted that the present invention is not limited by the above-mentioned embodiments, and it is obvious that various modifications may be made by one skilled in the art based on the recitation of the claims.
In any of the above aspects, the various features may be implemented in hardware, or as software modules running on one ore more processors. Features of one aspect may be applied to any of the other aspects.
The invention also provides a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A radio network control method comprising:
a first step of receiving location information from a transportable base station; and
a second step of determining, based on the location information and preset handover information per area, enable/disable of a handover between the transportable base station and another base station.

2. The radio network control method as claimed in claim 1, further comprising a step of notifying to a user equipment using a cell of the transportable base station, when handover enable is determined at the second step, information of a peripheral cell which allows a handover to the other base station based on in-use cell information per user equipment.

3. The radio network control method as claimed in claim 1, further comprising a step of notifying to a user equipment using a cell of a base station to which the transportable base station has moved, when handover enable is determined at the second step, information of a peripheral cell which allows a handover to the transportable base station based on in-use cell information per user equipment.

4. The radio network control method as claimed in claim 1, further comprising a step of controlling, when handover enable/disable control information with the other base station is received from the transportable base station in addition to the location information, the enable/disable of the handover between the transportable base station and the other base station based on the handover enable/disable control information.

5. The radio network control method as claimed in claim 2 or 3, further comprising a step of executing, when an addition request or a deletion request of the handover is received from a user equipment having received the peripheral cell information, an addition or a deletion of the handover, and of adding the peripheral cell information to the in-use cell information corresponding to the user equipment or deleting the peripheral cell information.

6. The radio network control method as claimed in claim 2 or 3, wherein the handover information per area comprises present location information, and the method further comprises a step of updating the present location information to information of a present location in case of a handover enable, at which time no notification of the peripheral cell information and no update of information are executed even when the handover enable is determined, thereby controlling a handover request.

7. A radio network control device comprising:
a first portion receiving location information from a transportable base station; and
a second portion determining, based on the location information and preset handover information per area, enable/disable of a handover between the transportable base station and another base station.

8. The radio network control device as claimed in claim 7, further comprising a portion notifying to a user equipment using a cell of the transportable base station, when handover enable is determined at the second step, information of a peripheral cell which allows a handover to the other base station based on in-use cell information per user equipment.

9. The radio network control device as claimed in claim 7, further comprising a portion notifying to a user equipment using a cell of a base station to which the transportable base station has moved, when handover enable is determined at the second step, information of a peripheral cell which allows a handover to the transportable base station based on in-use cell information per user equipment.

10. The radio network control device as claimed in claim 7, further comprising a portion controlling, when handover enable/disable control information with the other base station is received from the transportable base station in addition to the location information, the enable/disable of the handover between the transportable base station and the other base station based on the handover enable/disable control information.

11. The radio network control device as claimed in claim 8 or 9, further comprising a portion executing, when an addition request or a deletion request of the handover is received from a user equipment having received the peripheral cell information, an addition or a deletion of the handover, and adding the peripheral cell information to the in-use cell information corresponding to the user equipment or deleting the peripheral cell information.

12. The radio network control device as claimed in claim 8 or 9, wherein the handover information per area comprises present location information, and the device further comprises a portion updating the present location information to information of a present location in case of a handover enable, at which time no notification of the peripheral cell information and no update of information are executed even when the handover enable is determined, thereby controlling a handover request.
